Europäisches Patentamt

European Patent Office

Office européen des brevets

(19)

(11) Veröffentlichungsnummer: **0 036 122**
**B1**

(12) **EUROPÄISCHE PATENTSCHRIFT**

(45) Veröffentlichungstag der Patentschrift: 26.06.85

(21) Anmeldenummer: **81101495.0**

(22) Anmeldetag: **02.03.81**

(51) Int. Cl.⁴: **H 05 B 7/144**, G 05 B 15/02, G 05 F 1/02

(54) Anordnung zur Elektrodenregelung eines Lichtbogenofens.

(30) Priorität: **13.03.80 DE 3009731**

(43) Veröffentlichungstag der Anmeldung:
**23.09.81 Patentblatt 81/38**

(45) Bekanntmachung des Hinweises auf die Patenterteilung:
**26.06.85 Patentblatt 85/26**

(84) Benannte Vertragsstaaten:
**AT BE CH DE FR GB LI SE**

(56) Entgegenhaltungen:
**DE-A-1 790 143**
**DE-A-1 905 876**
**DE-A-2 440 960**
**DE-A-2 731 014**
**FR-A-1 498 393**
**US-A-3 431 344**

(73) Patentinhaber: **Siemens Aktiengesellschaft**
**Berlin und München Wittelsbacherplatz 2**
**D-8000 München 2 (DE)**

(72) Erfinder: **Nüsslin, Hans-Jörg**
**Falkenstrasse 70**
**D-8520 Erlangen (DE)**

Courier Press, Leamington Spa, England.

## Beschreibung

Die Erfindung betrifft eine Anordnung zur Elektrodenregelung eines aus einem Transformator gespeisten Lichtbogenofens gemäß dem Oberbegriff des Patentanspruches.

Die Einstellung des Betriebspunktes eines Lichtbogenofens hängt von verschiedenen Parametern ab, z.B. von den charakteristischen Eigenschaften des Ofens, von der Art und der Zusammensetzung des zu schmelzenden Materials und von den Leitungsreaktanzen. Dementsprechend ist der für die Einstellung des Betriebspunktes maßgebende Impedanz-Sollwert vorzugeben. Bisher wurden die Betriebspunkte theoretisch berechnet und durch Wahl der Transformatorstufe und des Elektrodenstromes eingestellt. Die Summe dieser einzelnen, je einer Trafostufe zugeordneten Betriebspunkte ergibt die Betriebskennlinie, die nur für die berücksichtigten Parameter gilt. Die theoretisch ermittelten Werte mußten im Betrieb korrigiert werden. Bei sich ändernden Parametern, z.B. bei einer Änderung der Vorreaktanzen oder bei einem Wechsel des Schmelzgutes, mußten jeweils neue Sollwerte vorgegeben werden, bis die die Ofenspannung und den Elektrodenstrom messenden Geräte die gewünschten Werte anzeigten.

Aus der US—A—34 31 344 ist eine rechnergesteuerte selbstanpassende Ofenregelung dieser Art bekannt. Eine Korrektur dieser Werte ist durch entsprechende Umprogrammierung möglich. Das gleiche gilt für eine Rückgängigmachung der eventuell nur zeitweise gewünschten Änderungen der Sollwerte.

Der Erfindung liegt die Aufgabe zugrunde, eine solche rechnergesteuerte selbstanpassende Ofenregelung auf möglichst einfache Weise mit analogen Mitteln so zu beeinflussen, daß der Impedanzregelkreis des Ofens unbeeinflußt bleibt, daß es aber möglich ist, den Impedanz-Sollwert wahlweise entweder so zu beeinflussen, daß er als neuer Impedanz-Sollwert übernommen wird oder die Korrektur einmalig bleibt, d.h. auf einfache Weise wieder rückgängig zu machen ist.

Diese Aufgabe wird mit den im Patentanspruch angegebenen Mitteln gelöst. Dadurch ist erreicht, daß die Bedienungsperson jederzeit einen Überblick über den Ofen zustand bekommt und darüberhinaus aufgrund des jeweils erkannten Betriebsverlaufes in diesen korrigierend ein greifen kann. Dieser Eingriff ist so flexibel, daß die Bedienungsperson die freie Wahl hat, ob ein solcher Eingriff dauerhaft, also in das Ofenprogramm übernommen werden soll oder ob er als einmaliger Eingriff nach dem Eintreten der gewünschten Wirkung wieder rückgängig gemacht werden soll, so daß das gewählte Programm davon unbeeinflußt bleibt.

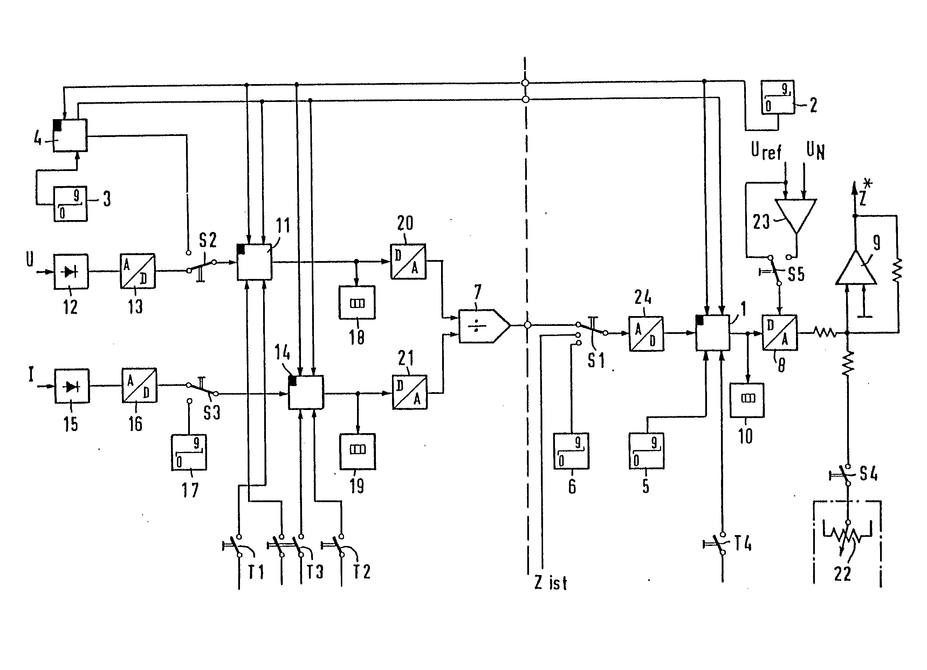

Anhand eines in der Zeichnung dargestellten Ausführungsbeispiels wird die Erfindung im folgenden näher erläutert.

Das in der Zeichnung nur für eine Drehstromphase dargestellte Ausführungsbeispiel enthält einen Digitalspeicher 1 mit beispielsweise 1024 Speicherzellen zu je acht bit. Die einzelnen Speicherzellen lassen sich mittels eines Zahleneinstellers 2 oder 3, der die Transformatorstufe als Zahlenwert oder unmittelbar die Leerlaufspannung der Transformatorstufen über einen weiteren Speicher 4 vorgibt, und mittels eines weiteren Zahleneinstellers 5, der die Nummer der Kennlinie vorgibt, anwählen. Jede der auf diese Weise angewählten Speicherzellen wird mit einem mittels eines Zahleneinstellers 6 festgelegten Impedanz-Sollwertes durch Betätigen eines Tasters T4 belegt, Durch Umschaltung eines Schalters S1 kann die jeweils angewählte Speicherzelle mit dem Ausgang eines Dividierers 7 verbunden werden, der den Impedanz-Istwert als Quotienten aus dem Istwert des Ofenstromes I und dem Istwert der Lichtbogenspannung U bildet. Der am Ausgang des Speichers 1 ständig anstenhede Impedanz-Sollwert $z^*$ der angewählten Zelle wird über einen Digital-Analog-Umsetzer 8 und einen Ausgabeverstärker 9 einem nicht dargestellten Impedanzregler zugeführt. Am Ausgang des Speichers 1 kann ferner eine den Impedanz-Sollwert als Zahlenwert anzeigende Vorrichtung 10 angeschlossen sind.

In einen Speicher 11, der ebenfalls mittels des Zahleneinstellers 2 oder 3 anwählbar ist, kann wahlweise der Istwert der Lichtbogenspannung U über einen Gleichrichter 12 und einen Analog-Digital-Wandler 13 oder, nach Umschalten eines Schalters S2, der gespeicherte vorgewählte Wert der leerlaufspannung oder die Trafostufe des Ofentransformators eingeschrieben werden. In gleicher Weise kann der Istwert des Ofenstromes über einen Gleichrichter 15 und einen Analog-Digital-Wandler 16 oder ein mittels eines Zahleneinstellers 16 vorgegebener Wert des Ofenstromes in einen Speicher 14 gesetzt werden. Je nach Stellung der mechanisch miteinander verbundenen Schalter S2 und S3 wird der anstehende Wert der Spannung bzw. des Stromes durch Betätigung eines Tasters T1 bzw. T2 auf den angewählten Platz des Speichers 11 bzw. 14 eingeschrieben. Mittels eines Tasters T3 kann der auf den jeweils angewählten Speicherplätzen stehende Wert wieder gelöscht werden. Die am Ausgang der Speicher 11 bzw. 14 anstehenden Werte erscheinen auf einer Anzeigevorrichtung 18 bzw. 19 als Zahlenwert und werden über einen Digital-Analog-Umsetzer 20 bzw. 21 an den Dividierer 7 geleitet.

Es ist nun auf einfache Weise möglich, einen vorgegebenen, im Speicher 1 hinterlegten Impedanz-Sollwert auf folgende Weise zu korrigieren. Dem Verstärker 9 wird ein an einem Potentiometer 22, das beispielsweise Bestandteil eines Steuerpultes sein kann, eingestellter Korrekturwert während des Schmelzbetriebes durch Betätigen des Schalters 4 zugeführt. Soll die Korrektur vorübergehend sein, wird der Schalter S4 wieder geöffnet und an dem eingestellten Programm ändert sich nichts. Soll der Korrekturwert hingegen in das Programm übernommen werden, müssen die sich infolge der Korrektur einstellenden Istwerte der der Phasen- oder Lichtbogenspannung und des Lichtbogenstromes durch Betätigung der Taster T1 bis T3 in die der Transformatorstufe entsprechende Zellen der Speicher 11 bzw. 14 gesetzt und der daraus im Dividierer 7 gebildete Impedanz-Istwert durch Betätigung des Schalters S1 als neuer Sollwert in die entsprechende Speicherzelle des Speichers 1 übernommen werden.

Mittels eines Schalters S5 läßt sich das System auf die Betriebsart "Regelung auf konstanten Faktor cos φ" oder "Regelung auf konstanten Strom" einstellen. In der dargestellten Position des Schalters S5 wird dem Digital-Analog-Umsetzer 8 eine Referenzspannung U als Digitalwert zugeführt und damit der Impedanz-Sollwert z* auf konstanten cos φ geregelt. Bei einem Einbruch der Netzspannung des Lichtbogenofens ergibt sich eine Verringerung des Elektrodenstromes und eine Leistungsreduzierung proportional dem Quadrat der Netzspannung. Durch Umschaltung des Schalters S5 wird dem Digital-Analog-Umsetzer 8 eine Referenzspannung in digitaler Form zugeführt, die in einem Verstärker 23 aus der Referenzspannung $U_{ref}$ und der Netzspannung $U_N$ gebildet ist. Diese Betriebsart entspricht der Regelung auf konstanten Strom. Dabei ändert sich die Scheinleistung des Ofens nur linear mit der Netzspannung.

## Patentanspruch

Anordnung zur Elektrodenregelung eines aus einem Transformator gespeisten Lichtbogenofens mit einem Impedanzregler je Elektrode, der das zugehörige Stellglied für die Höheneinstellung der Elektrode oder, in Drehstromlichtbogenöfen, jeder der Elektroden, steuert, mit einem Meßglied zur Lieferung einer der zwischen der sekundären Anschlußklemme des Transformators und dem Ofenmantel gemessenen Elektrodenspannung (U) proportionalen Größe und einer dem Elektrodenstrom (I) proportionalen Größe, wobei die je einer Spannungsstufe des Ofentransformators zugeordneten Betriebspunkte von vorbestimmten Kennlinien des Ofenbetriebs als Impedanz-Sollwert (z*) in den Zellen eines für jede Elektrode vorgesehenen Digital-Speichers (1) hinterlegbar sind, der am Ausgang des Speichers ständig anstehende Impedanz-Sollwert (z*) der jeweils angewählten Zelle über einen Digital-Analog-Umsetzer (8) dem Impulsregler vorgegeben ist und die Spannungsstufe des Ofentransformators oder die Kennliniennummer und die zugehörigen Impedanz-Sollwerte mittels Zahleneinstellern (2 bzw. 3, 5, 6) in die Speicherzellen des Digital-Speichers (1) eingebbar sind, dadurch gekennzeichnet, daß Umschalter (S2, S3) vorhanden sind, welche einem Dividierer (7) in ihrer einen Stellung frei wählbare Größen für die Elektrodenspannung und den Elektrodenstrom und in ihrer anderen Stellung den Istwerten von Elektrodenspannung und Elektrodenstrom proportionale Größen zuführen und der Dividierer (7) aus diesen Größen Impedanz-Sollwerte (z*) ermittelt, welche dem Speicher (1) als digitale Größen zuführbar und mit Hilfe eines weiteren Schalters (T4) walweise anstelle des gespeicherten Impedanz-Sollwertes in den Speicher eingebbar sind, und daß zur Korrektur des derart vorgegebenen analogen Impedanz-Sollwertes (z*) ein Korrekturglied (22) vorhanden ist, welches über einen von Hand betätigbaren Umschalter (S4) zu- und abschaltbar ist.

## Revendication

Dispositif pour le réglage des électrodes d'un four à arc alimenté à partir d'un transformateur, comportant, pour chaque électrode, un régulateur d'impédance qui commande le circuit de réglage associé servant au réglage de la hauteur de l'électrode ou, dans des fours à arc à courant triphasé, de chacune des électrodes, un circuit de mesure servant à délivrer une grandeur, qui est proportionnelle à la tension des électrodes (U) mesurée entre la borne de raccordement du secondaire du transformateur et l'enceinte du four, et une grandeur proportionnelle au courant (I) des électrodes, et dans lequel les points de fonctionnement, qui sont associés respectivement à un étage de tension du transformateur du four, de courbes caractéristiques prédéterminées du fonctionnement du four peuvent être mémorisées en tant que valeurs de consigne (z*) de l'impédance dans les cellules d'une mèmoire numérique (1) prévue pour chaque électrode, et dans lequel la valeur de consigne (z*) de l'impédance, qui apparaît en permanence à la sortie de la mémoire, de la cellule respectivement sélectionnée est envoyée par l'intermédiaire d'un convertisseur numérique/analogique (8) au régulateur d'impulsions et dans lequel l'étage de tension du transformateur du four ou le numéro de la courbe caractéristique et les valeurs de consigne associées de l'impédance peuvent être introduites dans les cellules de la mémoire numérique (1) par l'intermédiaire de régulateurs de valeurs numèriques (2 ou 3, 5, 7), caractérisé par le fait qu'il est prévu des commutateurs (S2, S3) qui envoient à un diviseur (7) situé dans l'une de ses positions, des grandeurs pouvant être choisies librement pour la tension et pour le courant des électrodes et envoient à ce diviseur dans son autre position, des grandeurs proportionnelles aux valeurs réelles de la tension et du courant des électrodes, et que le diviseur (7) détermine, à partir de ces grandeurs, des valeurs de consigne (z*) de l'impédance, qui peuvent être délivrées en tant que grandeurs numériques de la mémoire (1) et peuvent être introduites au choix, à l'aide d'un autre commutateur (T4), dans la mémoire à la place de la valeur de consigne mémorisée de l'impédance, et que pour réaliser la correction de la valeur de consigne analogique (z*) de l'impédance, prédéterminée de cette manière, il est prévu un circuit de correction (22) qui peut être branché et débranché par l'intermédiaire d'un commutateur (S4) pouvant être manoeuvré manuellement.

## Claim

An arrangement for the electrode regulation of an arc furnace which is fed from a transformer and has an impedance regulator for each electrode, which controls the assigned setting element for the level adjustment of the electrode or of each of the electrodes in rotary-current arc furnaces, having a measuring element for supplying a magnitude proportional to the electrode voltage (U) measured between the secondary connecting terminal of the transformer and the furnace case and for supplying a magnitude proportional to the electrode current (I), where the operating points of predetermined characteristics of the furnace operation respectively assigned to a voltage stage of the furnace transformer can be stored as a theoretical impedance value (z*) in the cells of a digital store (1) provided for each electrode, where the theoretical impedance value (z*) of the respectively selected cell, which permanently occurs at the output of the store, is fed to the pulse regulator by a digital-to-analogue converter (8) and the voltage stage of the furnace transformer or the number of the characteristics and the assigned theoretical impedance values can be fed into the storage cells of the digital store (1) by means of numerical adjuster (2 or 3, 5, 6), characterised in that change-over switches (S2, S3) are provided which in their one position feed freely selectable magnitudes for the electrode voltage and the electrode current to a divider (7), and in their other position feed magnitudes which are proportional to the actual values of electrode voltage and electrode current to said divider, and the divider (7) determines theoretical impedance values (z*) from these magnitudes which can be fed to the store (1) as digital magnitudes and which can be alternatively input into the store in place of the stored theoretical impedance value with the aid of a further switch (T4), and that in order to correct the theoretical analogue impedance value (z*) predetermined in this manner a correction element (22) is provided which can be connected and disconnected by means of a change-over switch (S4) which can be manually operated.

0 036 122